# EUROPÄISCHE PATENTSCHRIFT

(11) **EP 1 996 847 B1**
(45) Veröffentlichungstag und Bekanntmachung des Hinweises auf die Patenterteilung: **16.09.2009**
(21) Anmeldenummer: 07722054.9
(22) Anmeldetag: 15.03.2007
(51) Int. Cl.: F16K 11/074

(54) **DRUCKBEHÄLTERVENTIL, INSBESONDERE DRUCKLUFTFLASCHENVENTIL FÜR EIN DRUCKLUFTATEMGERÄT**
PRESSURISED CONTAINER VALVE, IN PARTICULAR COMPRESSED AIR BOTTLE VALVE FOR A COMPRESSED AIR RESPIRATOR
SOUPAPE DE CONTENANT SOUS PRESSION, NOTAMMENT SOUPAPE DE BOUTEILLE D'AIR COMPRIMÉ POUR UN APPAREIL RESPIRATOIRE À AIR COMPRIMÉ

(30) Priorität: 17.03.2006 DE 102006012778
(43) Veröffentlichungstag der Anmeldung: 03.12.2008
(73) Patentinhaber: MSA Auer GmbH, 12059 Berlin (DE)
(72) Erfinder: REHBERG, Rainer, 13055 Berlin (DE)
(74) Vertreter: Wablat, Wolfgang
(86) Internationale Anmeldenummer: PCT/DE2007/000491
(87) Internationale Veröffentlichungsnummer: WO 2007/110041

(56) Entgegenhaltungen:
- EP-A1- 1 327 804
- DE-A1- 10 225 003
- DE-A1- 19 917 431
- GB-A- 1 256 342
- GB-A- 2 233 738
- US-A- 5 411 059

## Beschreibung

Die Erfindung betrifft ein Druckbehälterventil, insbesondere Druckluftflaschenventil mit integriertem Druckminderer für ein Druckluftatemgerät, insbesondere einen Selbstretter, das einen Zuführungsstutzen und ein Entnahmegehäuse mit über ein Absperrorgan verschließbaren Zuführungs- und Entnahmekanälen aufweist.

In Druckluftflaschen für Atemgeräte wird die von einem Benutzer benötigte Atemluft unter hohem Druck gespeichert, um sie dem Benutzer bei Bedarf über ein mit der Druckluftflasche verbundenes Flaschenventil mit integriertem Druckminderer mit vermindertem, veratembarem Druck zur Verfügung zu stellen.

Ventilarmaturen für Druckbehälter sind aus dem Stand der Technik hinreichend bekannt. Beispielsweise beschreibt die DE 199 17 431 C2 eine an einen Druckbehälter angeschlossene Ventilarmatur, die ein Ventilgehäuse mit einem Behälterstutzen und einem Entnahmestutzen, die durch einen Medienkanal miteinander verbunden sind, umfasst. Dem Ventilgehäuse ist ein Absperrventil zugeordnet, das über ein Handrad betätigt wird. Durch Drehen des Handrades kann ein Verschlusselement mit eingegliederter Dichtungseinlage gegen einen Hauptventilsitz verlagert werden bzw. von diesem abgehoben werden, um den Medienkanal zwischen dem Behälterstutzen und dem Entnahmestutzen freizugeben oder zu verschließen. In das Ventilgehäuse ist weiterhin ein an den Medienkanal vor dem Entnahmestutzen angeschlossener Druckregler eingebunden, um den Druck der vom Druckbehälter zugeführten Luft auf die für den Verbraucher erforderliche Höhe zu reduzieren. Schließlich ist dem Ventilgehäuse ein Füllstutzen mit an den Medienkanal angeschlossenem Rückschlagventil zugeordnet, um den Druckbehälter, beispielsweise eine Druckluftflasche, entgegen der Wirkung des Rückschlagventils mit Druckluft befüllen zu können.

Derartige Ventilarmaturen sind in Verbindung mit Druckluftflaschen für Pressluftatmer insofern nachteilig, als zum Öffnen des Absperrventils mindestens zwei Umdrehungen des Handrades notwendig sind, um die für die druckgeminderte Atemluftversorgung des Benutzers erforderliche Funktion des Flaschenventils zu gewährleisten bzw. Unfälle aufgrund eines zu geringen Öffnungswinkels des Absperrventils zu vermeiden.

Ein weiterer Nachteil der bekannten Flaschenventile besteht darin dass die Absperreinrichtung nicht ausreichend dicht schließt bzw. verschlossen ist; so dass aus bevorrateten, gefüllten Pressluftflaschen ständig eine, wenn auch geringe, Luftmenge unmerklich entweichen kann. Bei der Benutzung ist die Flasche dann nicht oder nicht vollständig gefüllt ist, woraus sich eine Gefährdung des Benutzers ergibt. Besonders problematisch können solche Leckageverluste bei sogenannten Druckluft-Selbstrettern mit Haube sein, die für die Flucht und Selbstrettung aus schadstoffhaltigen Bereichen eingesetzt werden und oft über einen sehr langen Zeitraum nicht genutzt werden. In diesem Zeitraum kann die in sehr kleinen Pressluftflaschen gespeicherte Druckluft allmählich entweichen, so dass die Sicherheit der in einem Notfall zu rettenden Personen nicht gewährleistet ist.

Die bekannten Flaschenventile der oben genannten Art können zudem aufgrund der konstruktiven Ausbildung des Absperrventils und des für die Befüllung erforderlichen Rückschlagventils nur mit erheblichem Kostenaufwand gefertigt werden.

Der Erfindung liegt die Aufgabe zugrunde, ein Druckbehälterventil mit integriertem Druckminderer und einer Absperrvorrichtung für ein Pressluftatemgerät zu entwickeln, das kostengünstig hergestellt werden kann, eine einfache, zuverlässige Handhabung sowie eine verbesserte Dichtwirkung gewährleistet.

Erfindungsgemäß wird die Aufgabe mit einem gemäß den Merkmalen des Patentanspruchs 1 ausgebildeten Druckbehälterventil gelöst. Vorteilhafte Weiterbildungen und zweckmäßige Ausgestaltungen der Erfindung sind Gegenstand der Unteransprüche.

Der Grundgedanke der Erfindung besteht in einer quer zur Durchströmungsrichtung geteilten Ausbildung des Druckbehälterventils mit zwei in der Teilungsebene satt aufeinander liegenden, vorzugsweise keramischen Ventilscheiben, die an dem jeweiligen Teil, nämlich einem am Druckbehälter befestigten Zuführungsstutzen und einem mit diesem verbundenen, um eine Drehachse verdrehbaren oder in Querrichtung linear verschiebbaren Entnahmegehäuse, befestigt sind. In den Ventilscheiben ist eine mit dem Zuführungsstutzen verbundene Zuführungsöffnung bzw. eine mit dem Entnahmegehäuse verbundene Entnahmeöffnung ausgebildet. Durch Verdrehen des beweglichen Entnahmegehäuses gegenüber dem feststehenden Zuführstutzen kann die Luftzufuhr bei übereinander liegenden Öffnungen freigegeben werden. Andernfalls liegt die geschlossene Fläche der am Entnahmegehäuse gehaltenen Ventilscheibe abdichtend auf der Zuführungsbohrung und die Luftzufuhr ist unterbrochen. Die aneinander liegenden Flächen der keramischen Ventilscheiben sind derart glatt und eben ausgebildet, das dadurch bedingte Adhäsionskräfte zwar das lineare oder rotatorische Verschieben der Ventilscheiben gegeneinander gestatten, aber gleichzeitig eine sichere Abdichtung gewährleisten.

Das so ausgebildete, insbesondere für Druckluftflaschen von Pressluftatmern und vorzugsweise bei Selbstrettern verwendete Druckbehälterventil kann mit weniger als einer Umdrehung geöffnet werden, so dass ein angeschlossenes Atemgerät sofort einsatzbereit ist. Darüber hinaus gewährleist das aus keramischen Ventilscheiben gebildete Absperrorgan ein dichtes Verschließen von Druckluftflaschen, so dass die Leckageverluste gering sind und Selbstretter-Atemgeräte auch nach langer Zeit der Nichtbenutzung immer noch einsatzfähig sind. Aufgrund der geringen Zahl an Bauteilen kann das Ventil mit geringem Kostenaufwand hergestellt werden. Es ist funktionssicher, robust und einfach zu handhaben.

Gemäß einem weiteren Merkmal der Erfindung kann in der zweiten, am Entnahmegehäuse angebrachten Ventilplatte eine von der Entnahmeöffnung in Umfangsrichtung im Abstand angeordnete Füllöffnung vorgesehen sein, die mit einem an einen Füllstutzen angeschlossenen Füllkanal im Entnahmegehäuse fluchtet. Indem die Füllöffnung durch Verdrehen des Entnahmegehäuses auf die Zuführungsöffnung in der ersten Ventilplatte ausgerichtet wird, kann der Druckbehälter neu befüllt werden. Das normalerweise notwendige Rückschlagventil ist nicht mehr erforderlich.

In Ausgestaltung der Erfindung werden die beiden Ventilscheiben durch ein elastisches Bauteil, wie zum Beispiel eine Feder oder einen ring aus elastischem Material, aneinander verspannt.

Die Querschnittsform der Öffnungen in den keramischen Ventilscheiben ist vorzugsweise so ausgebildet, dass die Druckluft beim Öffnen des Ventils erst allmählich abströmt, das heißt, der durchströmte Anfangsquerschnitt zunächst gering ist. Beispielsweise kann die Zuführungs- und/oder die Entnahmeöffnung einen tropfen- oder dreieckförmigen Querschnitt haben.

In weiterer Ausgestaltung der Erfindung ist an dem drehbaren Entnahmegehäuse ein Anschlagelement vorgesehen, das mit am Zuführungsstutzen ausgebildeten Endanschlägen zur Fixierung der Entnahme- bzw. Füllposition zusammenwirkt.

Ein Ausführungsbeispiel der Erfindung wird anhand der Zeichnung näher erläutert. Es zeigen:
- Fig. 1: eine perspektivische Ansicht eines Druckluftflaschenventils mit angeschraubtem Füllstutzen;
- Fig. 2: eine seitliche Schnittansicht des Druckluftflaschenventils nach Fig. 1 in einer geöffneten, die Luftzufuhr zum Benutzer freigebenden Position;
- Fig. 3: eine Draufsicht der im drehbaren Gehäuseteil gehaltenen Ventilscheibe; und
- Fig. 4: eine Schnittansicht des Druckluftflaschenventils ohne Füllstutzen.

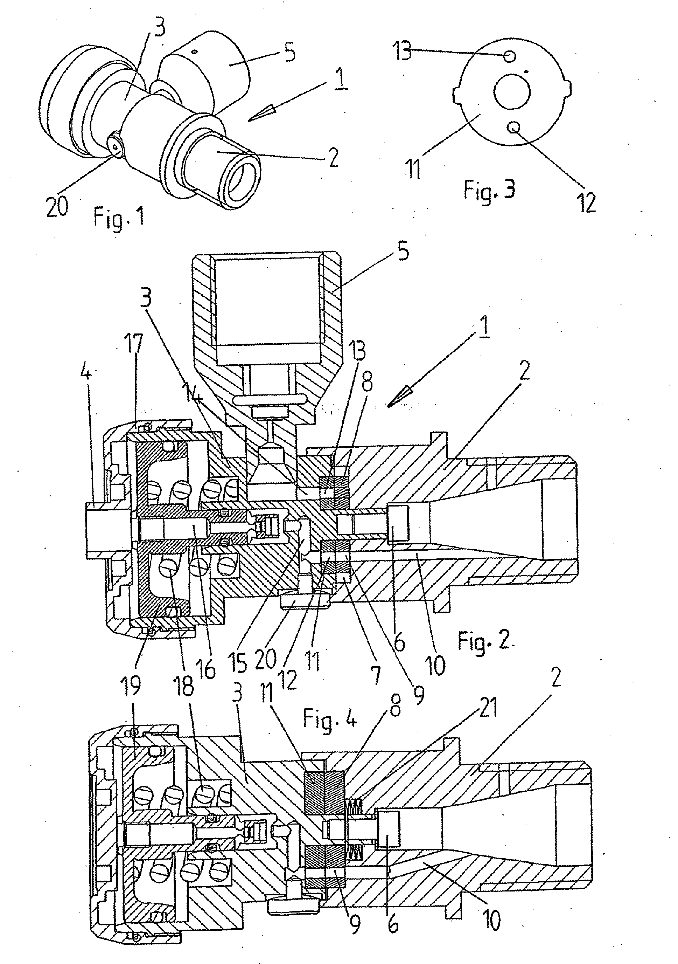

Wie Fig. 1 zeigt, umfasst das Druckbehälterventil 1 einen beispielsweise an eine Druckluftflasche (nicht dargestellt) eines Selbstretters fest anschließbaren Zuführungsstutzen 2, ein mit der Haube des Selbstretters verbundenes Entnahmegehäuse 3 mit einem Entnahmestutzen 4 und einen an einen Kompressor anschließbaren Füllstutzen 5 zum Befüllen der Druckluftflasche mit Druckluft. Der Zuführungsstutzen 2 und das Entnahmegehäuse 3 sind an den gegenüberliegenden Stirnseiten mittels eines als Schraube oder Stift ausgebildeten, axial ausgerichteten Befestigungsmittels 6 zueinander drehbeweglich verbunden. In einer stirnseitigen Ausnehmung 7 des Zuführungsstutzens 2 ist eine erste Ventilscheibe 8 in Umfangsrichtung formschlüssig gehalten. Eine in der ersten Ventilscheibe 8 vorgesehene Zuführungsöffnung 9 fluchtet mit einem Zuführungskanal 10 im Zuführungsstutzen 2. In einer stirnseitigen Ausnehmung des Entnahmegehäuses 3 ist eine zweite Ventilscheibe 11 formschlüssig fixiert, die - in Umfangsrichtung voneinander beabstandet - eine Entnahmeöffnung 12 und eine Füllöffnung 13 aufweist. Die Füllöffnung 13 ist über einen Füllkanal 14 mit dem im Entnahmegehäuse 3 verschraubten Füllstutzen 5 verbunden.

Die beidene Ventilscheiben 8 und 11 bestehen aus einem keramischen Material, das an den vollflächig aneinander grenzenden Berührungsflächen eben und glatt ausgebildet ist, so dass die beiden gegeneinander verdrehbaren Ventilscheiben 8 und 11 abdichtend aneinander liegen. Zur Unterstützung der innigen Berührung der beiden Ventilscheiben 8 und 11 kann die erste (untere) Ventilscheibe 8 unter der Wirkung einer Feder 21 gegen die obere Ventilscheibe 11 gedrückt werden. Durch Verdrehen des Entnahmegehäuses 3 gegen den feststehenden Zuführungsstutzen 2 kann entweder die Entnahmeöffnung 12 - wie in Fig. 2 dargestellt - oder die Füllöffnung 13 in eine mit der Zuführungsöffnung 9 und damit dem Zuführungskanal 10 übereinstimmende Position gebracht werden, so dass entweder von einem Kompressor erzeugte Luft in den Druckbehälter geleitet oder aus dem Druckbehälter entnommene Luft über in dem Entnahmegehäuse 3 sowie in einem in dieses integrierten Druckminderer ausgebildete Kanäle 15 und 16 in den Entnahmestutzen 4 und von dort zur Haube (zum Benutzer) gelangen kann. Der Entnahmestutzen 4 befindet sich in einem fest auf das Entnahmegehäuse 3 geschraubten Deckel 17.

Der in das Entnahmegehäuse 3 integrierte Druckminderer ist in bekannter Weise ausgebildet und umfasst im Wesentlichen einen unter der Wirkung einer Feder 18 und des druckreduzierten Mediums stehenden - die Medienzufuhr aus dem Druckbehälter vor der Luftentnahme aus dem Druckminderer kurzzeitig unterbrechenden - Kolben 19. An der Außenseite des Entnahmegehäuses 3 ist ein Anschlagelement 20 angebracht, das mit am Zuführungsstutzen 2 ausgebildeten Anschlägen (nicht dargestellt) zusammenwirkt. Die Anschläge fixieren das Entnahmegehäuse 3 und damit entweder die Entnahmeöffnung 12 oder die Füllöffnung 13 in einer mit der Zuführungsöffnung 9 fluchtendenden Position, während in der Position zwischen den beiden Anschlägen die Zuführungsöffnung 9 durch den zwischen der Füllöffnung und der Entnahmeöffnung liegenden Teil der zweiten Ventilscheibe 11 dicht verschlossen ist.

In Fig. 2 ist das Druckbehälterventil 1 in der die Luftzufuhr zum Benutzer freigebenden Position der zweiten Ventilscheibe 11 dargestellt.

Die Verwendung der beiden unter der Wirkung von Adhäsionskräften aneinander liegenden, aber gegeneinander verdrehbaren keramischen Ventilscheiben 8 und 11 gewährleistet ein sicheres Verschließen des Druckbehälters und eine deutliche Verringerung der Leckageverluste. Dadurch sind beispielsweise Selbstretter auch nach einem langen Zeitraum der Nichtbenutzung zuverlässig einsetzbar.

Der konstruktive Aufbau des Ventils ist einfach und der Kostenaufwand entsprechend gering, da für den Absperrund Füllvorgang nur wenige, unmittelbar in das Ventilgehäuse integrierte Bauteile, das heißt, die beiden Ventilscheiben 8 und 11, erforderlich sind. Der Einbau eines Rückschlagventils in die Füllleitung erübrigt sich.

Auch die Handhabung des Ventils ist denkbar einfach und sicher. Bereits nach einer Vierteldrehung des Entnahmegehäuses ist eine sichere Luftzufuhr zum Benutzer gewährleistet. Die Drehbewegung des Entnahmegehäuses 3 kann auch mit Hilfe des Anschlagelements vorgenommen werden. Bei der Verwendung des Ventils in Verbindung mit einem Selbstretter kann das Anschlagelement 20 mit einer Schnur oder dgl. verbunden werden, um in Verbindung mit der Handhabung des Selbstretters die Luftzufuhr automatisch freizugeben. Ein geringfügiges Öffnen des Absperrventils während der Nichtbenutzung und damit verbundene Leckagen, beispielsweise durch versehentliches Anstoßen an den Ventilkörper, sind nicht möglich, da die Luftzufuhr erst nach einer Drehung des Entnahmegehäuses um etwa 90° freigegeben wird.

Die Erfindung ist nicht auf das vorliegende Ausführungsbeispiel beschränkt. Beispielsweise ist es bei einer konstruktiv anderen Verbindung der beiden separaten Ventilteile denkbar, dass die beiden Ventilscheiben nicht durch eine Drehbewegung, sondern durch eine andere Bewegung, z.B. eine Linearbewegung, gegeneinander verschoben werden.

### Bezugszeichenliste

- 1: Druckbehälterventil
- 2: Zuführungsstutzen
- 3: Entnahmegehäuse
- 4: Entnahmestutzen
- 5: Füllstutzen
- 6: Befestigungsmittel v. 2, 3
- 7: Ausnehmung v. 2
- 8: Erste Ventilscheibe
- 9: Zuführungsöffnung
- 10: Zuführungskanal
- 11: Zweite Ventilscheibe
- 12: Entnahmeöffnung v. 11
- 13: Füllöffnung v. 11
- 14: Füllkanal
- 15: Kanäle in 3
- 16: Kanäle in 19
- 17: Deckel
- 18: Feder
- 19: Kolben
- 20: Anschlagelement
- 21: Feder

## Patentansprüche

1. Druckbehälterventil, insbesondere Druckluftflaschenventil mit integriertem Druckminderer für ein Druckluftatemgerät, insbesondere einen Selbstretter, das einen Zuführungsstutzen (2) und ein Entnahmegehäuse (3) mit durch ein Absperrorgan (8, 11) verschließbaren Zuführungs- und Entnahmekanälen (10, 15) aufweist, **dadurch gekennzeichnet, dass** der Zuführungsstutzen (2) und das Entnahmegehäuse (3) separate, miteinander verspannte und durch eine Drehbewegung um eine Drehachse (6) oder eine Linearbewegung zueinander verschiebbare Ventilteile sind, wobei an dem jeweiligen Ventilteil - miteinander in unmittelbarer flächiger Berührung stehend - eine erste Ventilscheibe (8) mit einer an den Zuführungskanal (10) anschließenden Zuführungsöffnung (9) und eine zweite Ventilscheibe (11) mit einer an den Entnahmekanal (15, 16) anschließenden Entnahmeöffnung (12) befestigt ist.

2. Druckbehälterventil nach Anspruch 1, **dadurch gekennzeichnet, dass** die zweite Ventilscheibe (11) eine in Umfangsrichtung von der Entnahmeöffnung (9) beabstandete Füllöffnung (13) aufweist, die über einen Füllkanal (14) mit einem am Entnahmegehäuse (3) lösbar befestigten Füllstutzen (5) zur Neubefüllung des Druckbehälters verbunden ist.

3. Druckbehälterventil nach Anspruch 1 oder 2, **dadurch gekennzeichnet, dass** die beiden Ventilscheiben (8, 11) unter der Wirkung einer elastischen Bauteils aneinander pressbar sind.

4. Druckbehälterventil nach Anspruch 3, **dadurch gekennzeichnet, dass** elastische Bauteil eine Schraubendruckfeder oder ein aus elastischem Material bestehender Ring ist.

5. Druckbehälterventil nach Anspruch 1 oder 2, **dadurch gekennzeichnet, dass** an dem Entnahmegehäuse (3) ein Anschlagelement (20) angebracht ist, das mit am Zuführungsstutzen (2) ausgebildeten Endanschlägen zur Fixierung des Entnahmegehäuses (3) in der Entnahmeposition oder in der Füllposition zusammenwirkt.

6. Druckbehälterventil nach Anspruch 5, **dadurch gekennzeichnet, dass** das Anschlagelement (20) mit einem flexiblen Betätigungsmittel zum automatischen Öffnen des Druckbehälterventils verbunden ist.

7. Druckbehälterventil nach Anspruch 1, **dadurch gekennzeichnet, dass** das Entnahmegehäuse (3) über den Entnahmestutzen (4) mit einem Atemgerät in Verbindung steht und in das Entnahmegehäuse (3) ein Druckminderer (18, 19) zur Bereitstellung von veratembarer Luft integriert ist.

8. Druckbehälterventil nach Anspruch 1, **dadurch gekennzeichnet, dass** die erste und zweite Ventilscheibe (8, 11) aus einem keramischen Material bestehen und deren einander berührende Flächen zur Ausbildung von Adhäsionskräften glatt und eben ausgebildet sind.

9. Druckbehälterventil nach Anspruch 1, **dadurch gekennzeichnet, dass** die Querschnittsfläche der Zuführungs- und/oder der Entnahmeöffnungen (9, 12) so ausgebildet ist, dass das Abströmvolumen beim Öffnen des Ventils nur allmählich steigt.

10. Druckbehälterventil nach Anspruch 9, **dadurch gekennzeichnet, dass** die Zuführungs- und/oder die Behälteröffnung (9, 12) eine tropfenförmige oder dreieckförmige Querschnittsfläche aufweist.

## Claims

1. A pressurized container valve, in particular compressed air bottle valve comprising integrated pressure reducer for a compressed air respirator, in particular a rescue breathing apparatus, which encompasses a supply connection (2) and a discharge housing (3) comprising supply and/or discharge channels (10, 15), which can be closed by means of a blocking element (8, 11), **characterized in that** the supply connection (2) and the discharge housing (3) are separate valve parts, which are braced to one another and which are displaceable to one another by means of rotary motion about an axis of rotation (6) or by means of a linear motion, wherein a first valve disc (8) comprising a supply opening (9) following the supply channel (10) and a second valve disc (11) comprising a discharge opening (12) following the discharge channel (15, 16) are fastened to the respective valve part - so as to be in direct 2-dimensional contact with one another.

2. The pressurized container valve according to claim 1, **characterized in that** the second valve disc (11) encompasses a filling opening (13), which is spaced apart from the discharge opening (9) in peripheral direction and which is connected via a filling channel (14) to a fill nozzle (5), which is fastened to the discharge housing (3) so as to be capable of being detached for the purpose of newly filling the pressurized container.

3. The pressurized container valve according to claim 1 or 2, **characterized in that** the two valve discs (8, 11) can be pressed against one another under the effect of an elastic component.

4. The pressurized container valve according to claim 3, **characterized in that** the elastic component is a helical compression spring or a ring made of elastic material.

5. The pressurized container valve according to claim 1 or 2, **characterized in that** a stop element (20), which interacts with end stops embodied on the supply connection (2) for the purpose of fixing the discharge housing (3) in the discharge position or in the filling position, is attached to the discharge housing (3) .

6. The pressurized container valve according to claim 5, **characterized in that** the stop element (20) is connected to a flexible actuation means for automatically opening the pressurized container valve.

7. The pressurized container valve according to claim 1, **characterized in that** the discharge housing (3) is connected to an air respirator via the discharge connection (4) and **in that** a pressure reducer (18, 19) is integrated into the discharge housing (3) for the purpose of providing breathable air.

8. The pressurized container valve according to claim 1, **characterized in that** the first and second valve disc (8, 11) are made of a ceramic material and **in that** the surfaces touching one another are formed so as to be smooth and flat for the purpose of forming adhesive powers.

9. The pressurized container valve according to claim 1, **characterized in that** the cross sectional surface of the supply and/or discharge openings (9, 12) is embodied in such a manner that the runoff volume only rises gradually in response to the opening of the valve.

10. The pressurized container valve according to claim 9, **characterized in that** the supply and/or the container opening (9, 12) encompasses a drop-shaped or triangular cross sectional surface.

## Revendications

1. Soupape de réservoir sous pression, en particulier soupape de bouteille à air comprimé comprenant un détendeur intégré pour un appareil respiratoire à air comprimé, en particulier un appareil pour l'évacuation qui présente une tubulure de guidage (2) et un boîtier de prélèvement (3) avec des canaux (10, 15) de guidage et de prélèvement pouvant être fermés par un organe d'isolement (8, 11), **caractérisée en ce que** la tubulure de guidage (2) et le boîtier de prélèvement (3) sont des parties de soupape séparées assemblées l'une avec l'autre et mobiles l'une vers l'autre par une rotation sur un axe de rotation (6) ou un mouvement linéaire, sur chaque partie de soupape (en contact de surface direct l'un avec l'autre), un premier disque de soupape (8) avec une ouverture de guidage (9) se raccordant sur le canal de guidage (10) et un deuxième disque de soupape (11) avec une ouverture de prélèvement (12) se raccordant sur le canal de prélèvement (15, 16) étant fixé.

2. Soupape de réservoir sous pression selon la revendication 1, **caractérisée en ce que** le deuxième disque de soupape (11) présente une ouverture de remplissage (13) à distance de l'ouverture de prélèvement (9) dans la direction périphérique, laquelle est reliée par un canal de remplissage (14) à une tubulure de remplissage (5) fixée de manière séparable sur le boîtier de prélèvement (3) pour une recharge du réservoir sous pression.

3. Soupape de réservoir sous pression selon la revendication 1 ou 2, **caractérisée en ce que** les deux disques de soupape (8, 11) peuvent être appuyés l'un sur l'autre sous l'action d'une pièce élastique.

4. Soupape de réservoir sous pression selon la revendication 3, **caractérisée en ce que** la pièce élastique est un ressort de pression à boudin ou un anneau en matériau élastique.

5. Soupape de réservoir sous pression selon la revendication 1 ou 2, **caractérisée en ce qu'**un élément de butée (20) est placé sur le boitier de prélèvement (3), lequel élément interagit avec des butées de fin de course formées sur la tubulure de guidage (2) pour fixer le boitier de prélèvement (3) dans la position de prélèvement ou dans la position de remplissage.

6. Soupape de réservoir sous pression selon la revendication 5, **caractérisée en ce que** l'élément de butée (20) est relié à un élément d'actionnement flexible pour l'ouverture automatique de la soupape de réservoir sous pression.

7. Soupape de réservoir sous pression selon la revendication 1, **caractérisée en ce que** le boitier de prélèvement (3) est en liaison avec un appareil respiratoire par la tubulure de prélèvement (4) et un détendeur (18, 19) est intégré dans le boitier de prélèvement (3) pour la mise à disposition d'air respirable.

8. Soupape de réservoir sous pression selon la revendication 1, **caractérisée en ce que** les premier et deuxième disques de soupape (8, 11) sont fabriqués dans un matériau céramique et leurs deux surfaces en contact l'une avec l'autre sont lisses et plates pour former des forces d'adhérence.

9. Soupape de réservoir sous pression selon la revendication 1, **caractérisée en ce que** la face transversale des ouvertures de guidage et/ou de prélèvement (9, 12) sont ainsi formées que le volume sortant n'augmente que graduellement à l'ouverture de la soupape.

10. Soupape de réservoir sous pression selon la revendication 9, **caractérisée en ce que** les ouvertures de guidage et/ou de prélèvement (9, 12) présentent une face transversale formant des gouttes ou un triangle.
